(19) Europäisches Patentamt
European Patent Office
Office européen des brevets

(11) **EP 3 101 485 B1**

(12) **FASCICULE DE BREVET EUROPEEN**

(45) Date de publication et mention
de la délivrance du brevet:
**22.11.2017 Bulletin 2017/47**

(51) Int Cl.:
**G04B 19/04** *(2006.01)*      **G04B 13/02** *(2006.01)*
**F16B 4/00** *(2006.01)*

(21) Numéro de dépôt: **16172664.1**

(22) Date de dépôt: **02.06.2016**

(54) **PROCEDE D'ASSEMBLAGE PAR CHASSE DE DEUX COMPOSANTS HORLOGERS ET ASSEMBLAGE OBTENU PAR CE PROCEDE**

VERFAHREN ZUM VERBINDEN ZWEIER UHRENKOMPONENTEN DURCH EINPRESSEN, SOWIE DURCH DAS VERFAHREN ERHALTENE BAUTEIL

METHOD FOR ASSEMBLING TWO TIMEPIECE COMPONENTS BY DRIVING AND ASSEMBLY OBTAINED BY SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.06.2015 CH 8022015**

(43) Date de publication de la demande:
**07.12.2016 Bulletin 2016/49**

(73) Titulaire: **Montblanc Montre SA**
**2400 Le Locle (CH)**

(72) Inventeur: **Chabart, Mickaël**
**2300 La Chaux de Fonds (CH)**

(74) Mandataire: **Micheli & Cie SA**
**Rue de Genève 122**
**Case Postale 61**
**1226 Genève-Thônex (CH)**

(56) Documents cités:
**CH-A- 436 134          CH-A1- 706 645**
**CH-A2- 699 974          CH-B5- 594 256**
**DE-A1-102012 221 322     JP-A- S5 796 283**

**Description**

La présente invention se rapporte à la chasse d'un composant horloger tel qu'une aiguille, une roue ou tout autre mobile horloger sur un axe, ou vice versa.

Pour des composants horlogers de faible taille qu'ils soient en un matériau comportant un domaine plastique, peu de domaine plastique ou pas de domaine plastique, il est toujours difficile de garantir les limites imposées à une force de chasse pour un assemblage donné du fait des tolérances des pièces à assembler.

A titre d'exemple on a constaté que pour la chasse d'une aiguille en acier bleuie sur un axe en acier, avec une différence de un micron sur le diamètre de l'axe ou du canon de l'aiguille la force de chasse variait de six à dix newtons.

Comme l'axe et l'aiguille comportent typiquement des tolérances d'usinage de ±3 microns, l'assemblage d'une aiguille sur un axe peut présenter une plage de tolérance allant de 0 à 12 microns soit potentiellement une différence de force de chasse de septante deux à cent vingt newtons alors que la force de chasse doit par exemple être comprise entre 30 et 60 newtons pour un assemblage destiné à un mouvement donné.

Cela implique en pratique, par exemple dans le cas d'aiguilles, soit une mise au rebut de nombreuses pièces, de l'ordre de 30%, soit un équarrissage ou un resserrage des canons des aiguilles ou éventuellement un appairage préalable des axes et aiguilles ou autre composant à assembler ce qui renchérit la production.

Le but de la présente invention est de permettre la chasse d'un composant horloger, aiguille ou mobile, sur un axe ou l'inverse en respectant une plage donnée pour la force de chasse sans nécessiter de retoucher ou appairer les pièces à assembler usinées aux tolérances habituelles et en évitant la mise au rebut de pièces.

On connaît du document EP 2442190 pour la chasse d'une pièce en silicium l'utilisation d'une pièce intermédiaire annulaire introduite dans le trou du composant devant être chassé sur un axe. L'utilisation d'une pièce intermédiaire complique l'assemblage car il faut prévoir sa fabrication et son montage sur le composant horloger. De plus cette divulgation se limite à un assemblage d'une pièce ne comportant pas de domaine plastique.

Le document CH 706645 décrit lui aussi un système d'accouplement pour monter une pièce en matériau cassant, telle qu'une roue en silicium ou une aiguille, sur un axe. Selon ce document, une couche est déposée au moins partiellement entre la pièce et l'axe, et l'axe est chassé dans le trou, la couche étant dimensionnée et positionnée pour absorber la déformation plastique liée à l'opération de chassage. La couche peut être une couche en métal doux déposée par un procédé PVD (« physical vapour deposition » en anglais) ou une couche polymère comme le parylène qui est typiquement déposée par un procédé CVD (« chemical vapour deposition » en anglais). Ces procédés de déposition sont relativement élaborés et nécessitent des équipements spécialisés. De plus, pour une couche en polymère, ils ne permettent pas la polymérisation en solution, et notamment dans le cas d'une aiguille de petites dimensions, il est difficile à déposer la couche uniquement sur certaines zones distinctes. Aussi, le procédé PVD a lieu généralement à des températures relativement importantes, et même le dépôt CVD du parylène a typiquement lieu à des températures entre 100-200°C. Ces températures peuvent endommager un composant délicat comme une aiguille horaire.

Le document DE 102012221322 décrit le dépôt d'une couche plastique sur une rondelle utilisant le moulage par injection aux fins d'augmenter les tolérances de chassage notamment dans le domaine automobile. Pour une telle injection d'un polymère, des températures de plus de 200°C sont généralement utilisées avec des pressions de plusieurs tonnes pour injecter des fluides visqueux ayant typiquement une viscosité de 100 à 10'000 Pa·s. Encore une fois, des telles pressions et températures risquent fortement d'endommager un composant délicat comme une aiguille horaire. De plus, il est difficile de déposer la couche uniquement sur certaines zones distinctes avec le moulage par injection.

La présente invention a pour objet un procédé d'assemblage par la chasse d'un composant horloger, aiguille ou mobile notamment, sur son axe ou vice versa qui présente les caractéristiques énoncées à la revendication 1.

L'invention a également pour objet un composant horloger obtenu par ledit procédé.

Les dessins annexés illustrent schématiquement et à titre d'exemple différents composants obtenus par le procédé selon l'invention.

La figure 1 illustre en coupe une aiguille.
La figure 2 illustre en coupe l'aiguille de la figure 1 chassée sur son axe.
Les figures 3 et 4 illustrent en plan deux variantes de l'aiguille illustrée à la figure 1.

Le présent procédé d'assemblage par la chasse d'un premier composant horloger, axe ou pivot, sur un second composant horloger, aiguille ou mobile, ou inversement, comporte les étapes suivantes:

- on dépose sur tout ou une partie de soit l'axe du premier composant soit la paroi du trou du second composant horloger un monomère ou polymère à l'état liquide ou pâteux, c'est-à-dire le monomère ou polymère est solubilisé dans un solvant ;
- on sèche ou réticule le monomère ou polymère à l'état liquide ou pâteux pour sa solidification afin d'obtenir un polymère réticulé ; et

- on chasse le premier composant dans le trou du second composant horloger, respectivement le second composant horloger sur le premier composant horloger, la force de chasse étant déterminée par les caractéristiques du polymère réticulé et non des matériaux des composants horlogers.

Avantageusement, le procédé peut avoir lieu à température ambiante (voire des températures entre 15-25°C), et à ces températures la viscosité du monomère ou polymère solubilisé dans le solvant est de préférence inférieure ou égale à 10 Pa·s, ce qui permet de passer ce dernier au travers de petites ouvertures (par exemple d'un diamètre de 200 microns ou moins) d'une aiguille d'injection ou d'un autre outil simple comparable. La faible viscosité du monomère ou polymère solubilisé permet aussi d'utiliser des systèmes de dosage de quelques nanolitres, ce qui n'est pas possible pour des procédés utilisant des polymères trop visqueux et à chaud. De plus, l'utilisation d'un monomère ou polymère en état liquide en tant que matière déposée permet de former des couches plus fines, car il reste moins de matière sèche après l'étape de séchage que s'il n'y avait pas de solvant dans la matière déposée.

Selon une forme d'exécution privilégiée :

a. on usine un premier composant horloger à un diamètre de A $\pm$ a où A est le diamètre extérieur nominal de ce premier composant et a la tolérance d'usinage de celui-ci;

b. on usine un trou dans un second composant horloger à un diamètre (A $\pm$ b) + c où A est le diamètre nominal du premier composant, où b est la tolérance d'usinage du second composant et où c est supérieur à 2(a + b) de sorte que quelle que soit la dimension réelle du diamètre extérieur du premier composant et le diamètre intérieur du trou du second composant ce premier composant pénètre sans frottement dans le trou du second composant.

c. On dépose sur tout ou partie de la paroi du trou du second composant horloger, de préférence de façon uniforme autour de son axe, un monomère ou polymère à l'état liquide ou pâteux de sorte que le diamètre du passage laissé libre dans ledit trou présente un diamètre inférieur à la valeur A - a, soit du diamètre extérieur nominal du premier composant moins sa tolérance d'usinage.

d. On sèche ou réticule le monomère ou polymère à l'état liquide ou pâteux pour sa solidification.

e. On chasse le premier composant dans le trou du second composant horloger respectivement le second composant horloger sur le premier composant horloger, la force de chasse étant déterminée par les caractéristiques du polymère réticulé et non du matériau des composants horlogers.

Généralement le premier composant horloger se présente sous la forme d'un axe destiné à être chassé dans un trou du second composant horloger se présentant sous la forme d'une aiguille, d'une roue ou tout autre mobile horloger, mais le procédé s'applique également à la chasse d'un premier composant horloger comportant un trou sur un second composant horloger présentant un axe.

Grâce au fait que le diamètre réel du trou d'un quelconque second composant horloger d'un lot de seconds composants horlogers est toujours plus grand que le diamètre extérieur d'un quelconque premier composant horloger il n'y a plus besoin de retoucher les composants avant leur assemblage par chasse et la mise au rebut de composants est évitée.

La force de chasse d'un premier composant dans un second composant est déterminée uniquement par la nature du polymère réticulé qui est disposé ou formé sur la surface circonférentielle interne du trou du second composant, de l'épaisseur de la couche de ce polymère et du jeu entre les deux composants avant le dépôt de polymère dans le trou du second composant horloger.

La ductilité du polymère réticulé étant beaucoup plus forte que celle du matériau, acier, laiton ou autre matériaux avec une faible plasticité des premier et second composants, la force de chasse ne varie plus que dans de faibles proportions en fonction de l'épaisseur de la couche de polymère et peut donc être contenue à l'intérieur d'une fourchette préétablie de, par exemple, 30 à 60 N sans procéder à la retouche des composants horlogers à chasser. On limite de cette façon également drastiquement la mise au rebut de ces composants horlogers.

La valeur c entrant dans la détermination dépend du diamètre du trou du second composant horloger qui est toujours supérieur à 2(a + b) soit deux fois la somme des tolérances d'usinage des composants horlogers mais également de l'épaisseur e de la couche de polymère réticulé qui est déposée ou formée sur le composant et qui peut varier suivant les applications de 1 micron à 500 microns. En pratique, connaissant la fourchette de valeur de la force de chasse que l'on désire obtenir généralement de 5 à 80 N et la nature du polymère ou monomère utilisé, on détermine l'épaisseur e de la couche de polymère réticulé et la valeur de c entrant dans la détermination du diamètre nominal du trou du deuxième composant horloger, valeur de c qui est toujours supérieure à 2(a+ b) mais inférieure au double de l'épaisseur de la couche de polymère réticulé augmentée du double de la somme des tolérances, soit

$$2(a + b) < c < 2e + 2(a + b)$$

Généralement après usinage le second composant horloger est nettoyé par un traitement plasma ou par un solvant puis une série de seconds composants est disposée sur un posage placé sur une machine à trois axes (type JANOME).

La solution de polymère ou monomère est distribuée par une aiguille d'injection qui est déplacée par la machine successivement d'un trou d'un composant au trou du composant suivant pour appliquer sur les parois des trous de tous les seconds composants placés sur le posage un film, une couche, des masses ou des spots individuels, ou des lignes de polymère ou monomère. Après séchage du polymère ou du monomère à l'air libre ou dans une étuve ou sous vide on procède si besoin à la réticulation de la couche de polymère ou de monomère par un flash ou irradiation UV ou par d'autres systèmes comme IR curing, blue light curing, simple séchage pour certains types de vernis avec polymère dissout, réticulation à l'air humide pour les cyanoacrylates, époxy, etc. La réticulation UV est cependant privilégiée, car elle permet d'avoir une meilleure adhésion du polymère réticulé au substrat.

Ce procédé permet donc d'optimiser la plage de tolérance de la force de chasse d'un assemblage, la force de chasse étant déterminée par la nature du polymère réticulé et par la façon dont le polymère ou le monomère est appliqué sur la surface interne du trou du second composant horloger, couches continues, lignes, spots, etc... et non plus par les caractéristiques des matériaux des composants horlogers à assembler.

Ce procédé peut facilement être automatisé, ce qui réduit le rebut ou le retouchage des pièces à assembler par chasse et permet de définir la force de chasse indépendamment des matériaux dans lesquels sont fabriqués les composants horlogers.

Ce procédé est particulièrement bien adapté pour procéder à la chasse d'une aiguille d'un affichage sur son axe ou la chasse d'un axe dans un mobile horloger.

Avantageusement le procédé de la présente invention peut avoir lieu à une température ambiante, utilisant des outils simples et engendre peu de risque d'endommagement des composant horlogers, notamment dans le cas des aiguilles horaires délicates. De plus, le procédé permet de former le polymère réticulé en couche mince, sur des zones distinctes bien définies, et avec une très bonne adhérence au composant.

Suivant l'épaisseur et la nature du polymère ou du monomère utilisé il peut être pulvérisé ou déposé sur toute la surface interne du trou pratiqué dans le second composant horloger. Il peut également y être déposé sur certaines zones seulement de la surface interne de ce trou. Ces zones peuvent être formées par des lignes suivant des génératrices du trou ou formant un angle avec celles-ci. Ces lignes peuvent être parallèles entre elles ou s'entrecroiser. Ces zones peuvent également être formées par des spots de polymère ou de monomère sous forme de points circulaires ou polygonaux.

Toutefois ces dépôts de polymère ou de monomère sont de préférence uniformément répartis autour de l'axe du trou pour permettre une chasse équilibrée.

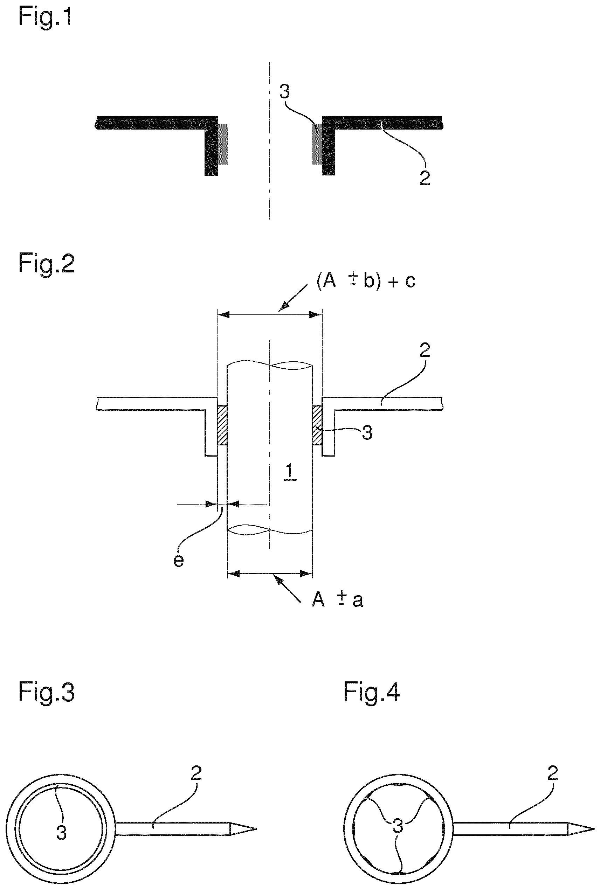

Sur la figure 1 on voit en coupe le second composant horloger 2 dont le trou est muni d'une couche de polymère 3.

Sur la figure 2 on voit l'assemblage du premier composant horloger 1 chassé dans le trou du second composant 2 par déformation de la couche de polymère 3.

La figure 3 illustre en plan un second composant horloger 2 dont le trou est muni d'une couche uniforme de polymère 3.

La figure 4 illustre en plan un second composant horloger dont le trou est muni de bandes ou de spots de polymère 3.

La force de chasse dépend de la géométrie des pièces mais surtout des propriétés des matériaux.

En comparaison des métaux les polymères sont souples, mous et malléables.

|  | Acier | Laiton | Polymère |
|---|---|---|---|
| Module d'Young (GPa) | ≈200 | 100-130 | 0.2-5 |
| Limite d'élasticité Re (MPa) | 220-2000 | 100-500 | 0.2-110 |
| Coefficient d'allongement A(%) | 3-30 | 4-28 | 5-1500 |

Le polymère réticulé à l'intérieur du trou va donc se déformer plus facilement que le métal et permettre une chasse plus aisée sur une plus large fourchette de tolérance sans entraîner de fortes variations de la force de chasse.

Selon une variante de la présente invention, le matériau polymère ou monomère peut être appliqué sur la surface circonférentielle de l'axe, à la place de sur la surface de la paroi du trou.

D'autres avantages de ce traitement sont que l'aiguille ainsi traitée tournera moins facilement sur son axe lors de choc ou d'à-coups (déréglage des aiguilles) et qu'elle se déchasse moins facilement lors de choc ou d'à-coups.

**EP 3 101 485 B1**

**Revendications**

1. Procédé d'assemblage par chasse d'un premier composant horloger, axe ou pivot, dans un trou d'un second composant horloger, aiguille ou mobile ou inversement, comportant les étapes suivantes :

   - on dépose sur tout ou une partie de soit l'axe du premier composant soit la paroi du trou du second composant horloger un monomère ou polymère à l'état liquide ou pâteux ;
   - on sèche ou réticule le monomère ou polymère à l'état liquide ou pâteux pour sa solidification afin d'obtenir un polymère réticulé; et
   - on chasse le premier composant dans le trou du second composant horloger, respectivement le second composant horloger sur le premier composant horloger, la force de chasse étant déterminée par les caractéristiques du polymère réticulé et non des matériaux des composants horlogers.

2. Procédé selon la revendication 1, comportant également les étapes suivantes :

   - on usine le premier composant horloger à un diamètre de A $\pm$ a où A est le diamètre extérieur nominal de ce premier composant et a la tolérance d'usinage de celui-ci ; et
   - on usine un trou dans le second composant horloger à un diamètre (A $\pm$ b) + c où A est le diamètre nominal du premier composant, où b est la tolérance d'usinage du second composant et où c est supérieur à 2(a + b) de sorte que quelle que soit la dimension réelle du diamètre extérieur du premier composant et intérieur du trou ce premier composant pénètre sans frottement dans le trou du second composant ; de manière à ce que le diamètre du passage laissé libre dans ledit trou présente un diamètre inférieur à la valeur A - a, soit du diamètre extérieur nominal du premier composant moins sa tolérance d'usinage.

3. Procédé selon la revendication 1 ou 2, **caractérisé par le fait que** l'épaisseur de la couche de polymère réticulé formée sur le premier composant est comprise entre 1 micron et 500 microns.

4. Procédé selon l'une des revendications 1 à 3 **caractérisé par le fait que** la couche de polymère réticulé est formée uniformément soit sur toute la surface circonférentielle de l'axe du premier composant soit toute la surface circonférentielle de la paroi du trou du second composant horloger.

5. Procédé selon l'une des revendications 1 à 3, **caractérisé par le fait que** le polymère réticulé est formé sur certaines zones seulement de soit la surface circonférentielle de l'axe du premier composant soit la surface circonférentielle de la paroi du trou du second composant horloger.

6. Procédé selon la revendication 5, **caractérisé par le fait que** le polymère réticulé est formé sur certains spots ou lignes seulement de ladite surface.

7. Procédé selon l'une des revendications 1 à 3, **caractérisé par le fait que** le polymère réticulé est uniformément réparti autour de l'axe du trou du second composant horloger après le chassage.

8. Procédé selon l'une des revendications 1 à 7, **caractérisé par le fait que** le polymère réticulé est formé sur la paroi du trou du second composant horloger.

9. Procédé selon l'une des revendications 1 à 8, **caractérisé par le fait qu'**on dépose le monomère ou polymère à l'état liquide ou pâteux à une température ambiante.

10. Procédé selon l'une des revendications 1 à 9, **caractérisé par le fait que** le monomère ou polymère à l'état liquide ou pâteux à une viscosité inférieure ou égale à 10 Pa·s.

11. Procédé selon l'une des revendications 1 à 10, **caractérisé par le fait qu'**on dépose le monomère ou polymère à l'état liquide ou pâteux utilisant un outil telle qu'une aiguille d'injection ayant une ouverture de diamètre de 200 microns ou moins.

12. Procédé selon l'une des revendications 1 à 11, **caractérisé par le fait qu'**on réticule le monomère ou polymère à l'état liquide ou pâteux par flash ou irradiation UV.

13. Assemblage de deux composants horlogers par chasse selon le procédé de l'une des revendications 1 à 12.

**Patentansprüche**

1. Verfahren zur Montage eines ersten Uhrenbauteils, Achse oder Drehgelenk, in einem Loch eines zweiten Uhrenbauteils, Zeiger oder Triebfeder oder umgekehrt, durch Eintreiben, umfassend die folgenden Schritte:

   - Aufbringen auf der Gesamtheit oder einem Teil entweder der Achse des ersten Bauteils oder der Wand des Loches des zweiten Uhrenbauteils eines Monomers oder Polymers im flüssigen oder pastösen Zustand;
   - Trocknen oder Vernetzen des Monomers oder Polymers im flüssigen oder pastösen Zustand zu seiner Verfestigung, um ein vernetztes Polymer zu erhalten; und
   - Eintreiben des ersten Bauteils in das Loch des zweiten Uhrenbauteils bzw. des zweiten Uhrenbauteils in das erste Uhrenbauteil, wobei die Eintreibkraft durch die Eigenschaften des vernetzten Polymers und nicht der Materialien der Uhrenbauteile bestimmt wird.

2. Verfahren nach Anspruch 1, umfassend auch die folgenden Schritte:

   - Bearbeiten des ersten Uhrenbauteils auf einen Durchmesser von A $\pm$ a, wobei A der Nominalaußendurchmesser dieses ersten Bauteils und a die Bearbeitungstoleranz desselben ist; und
   - Bearbeiten eines Loches in dem zweiten Uhrenbauteil auf einen Durchmesser (A $\pm$ b) + c, wobei A der Nominaldurchmesser des ersten Bauteils ist, wobei b die Bearbeitungstoleranz des zweiten Bauteils ist, und wobei c größer als 2(a+b) ist, so dass dieses erste Bauteil unabhängig von der tatsächlichen Abmessung des Außendurchmessers des ersten Bauteils und des Innendurchmessers des Loches ohne Reibung in das Loch des zweiten Bauteils eindringt; so dass der Durchmesser des in dem Loch frei gelassenen Durchgangs einen Durchmesser kleiner als der Wert A-a, d.h. des Nominalaußendurchmessers des ersten Bauteils minus seiner Bearbeitungstoleranz, hat.

3. Verfahren nach Anspruch 1 oder 2, **dadurch gekennzeichnet, dass** die Dicke der vernetzten Polymerschicht, die auf dem ersten Bauteil ausgebildet ist, zwischen 1 Mikrometer und 500 Mikrometer beträgt.

4. Verfahren nach einem der Ansprüche 1 bis 3, **dadurch gekennzeichnet, dass** die vernetzte Polymerschicht einheitlich entweder auf der gesamten Umfangsfläche der Achse des ersten Bauteils oder auf der gesamten Umfangsfläche der Wand des Loches des zweiten Uhrenbauteils ausgebildet ist.

5. Verfahren nach einem der Ansprüche 1 bis 3, **dadurch gekennzeichnet, dass** das vernetzte Polymer nur auf gewissen Zonen entweder der Umfangsfläche der Achse des ersten Bauteils oder auf der Umfangsfläche der Wand des Loches des zweiten Uhrenbauteils ausgebildet ist.

6. Verfahren nach Anspruch 5, **dadurch gekennzeichnet, dass** das vernetzte Polymer nur auf gewissen Punkten oder Linien der Fläche ausgebildet ist.

7. Verfahren nach einem der Ansprüche 1 bis 3, **dadurch gekennzeichnet, dass** das vernetzte Polymer einheitlich um die Achse des Loches des zweiten Uhrenbauteils nach dem Eintreiben verteilt ist.

8. Verfahren nach einem der Ansprüche 1 bis 7, **dadurch gekennzeichnet, dass** das vernetzte Polymer an der Wand des Loches des zweiten Uhrenbauteils ausgebildet ist.

9. Verfahren nach einem der Ansprüche 1 bis 8, **dadurch gekennzeichnet, dass** das Monomer oder Polymer im flüssigen oder pastösen Zustand bei Raumtemperatur aufgebracht wird.

10. Verfahren nach einem der Ansprüche 1 bis 9, **dadurch gekennzeichnet, dass** das Monomer oder Polymer im flüssigen oder pastösen Zustand eine Viskosität kleiner oder gleich 10 Pa.s hat.

11. Verfahren nach einem der Ansprüche 1 bis 10, **dadurch gekennzeichnet, dass** das Monomer oder Polymer im flüssigen oder pastösen Zustand aufgebracht wird, wobei ein Werkzeug wie eine Injektionsnadel mit einer Öffnung mit einem Durchmesser von 200 Mikrometer oder weniger verwendet wird.

12. Verfahren nach einem der Ansprüche 1 bis 11, **dadurch gekennzeichnet, dass** das Monomer oder Polymer im flüssigen oder pastösen Zustand durch Blitzlicht oder UV-Strahlung vernetzt wird.

**13.** Montage von zwei Uhrenbauteilen durch Eintreiben nach dem Verfahren eines der Ansprüche 1 bis 12.

**Claims**

**1.** Method of assembling by driving a first timepiece component, shaft or pivot, into a hole of a second timepiece component, hand or mobile, or vice-versa, comprising the following steps:

- applying a monomer or polymer in the liquid or pasty state over all or part of either the shaft of the first component or the wall of the hole of the second timepiece component;
- drying or cross-linking the monomer or polymer in the liquid or pasty state to solidify same in order to obtain a cross-linked polymer; and
- driving the first component into the hole of the second timepiece component, or the second timepiece component onto the first timepiece component, the driving force being determined by the features of the cross-linked polymer and not of the materials of the timepiece components.

**2.** Method as claimed in claim 1, also comprising the following steps:

- machining the first timepiece component to a diameter of A $\pm$ a, where A is the nominal outer diameter of this first component and a is the machining tolerance thereof; and
- machining a hole in the second timepiece component to a diameter (A $\pm$ b) + c, where A is the nominal diameter of the first component, where b is the machining tolerance of the second component, and where c is greater than 2(a + b) such that whatever the actual dimension of the outer diameter of the first component and of the inner diameter of the hole, this first component enters the hole of the second component in a friction-less manner; such that the diameter of the passage left free in said hole has a diameter smaller than the value A - a, i.e. the nominal outer diameter of the first component less its machining tolerance.

**3.** Method as claimed in claim 1 or 2, **characterised in that** the thickness of the cross-linked polymer layer formed on the first component is between 1 micron and 500 microns.

**4.** Method as claimed in any one of claims 1 to 3, **characterised in that** the cross-linked polymer layer is formed uniformly either over all the circumferential surface of the shaft of the first component or all the circumferential surface of the wall of the hole of the second timepiece component.

**5.** Method as claimed in any one of claims 1 to 3, **characterised in that** the cross-linked polymer is formed only on certain areas of either the circumferential surface of the shaft of the first component or the circumferential surface of the wall of the hole of the second timepiece component.

**6.** Method as claimed in claim 5, **characterised in that** the cross-linked polymer is formed only on certain spots or lines of said surface.

**7.** Method as claimed in any one of claims 1 to 3, **characterised in that** the cross-linked polymer is distributed uniformly about the shaft of the hole of the second timepiece component after the driving process.

**8.** Method as claimed in any one of claims 1 to 7, **characterised in that** the cross-linked polymer is formed on the wall of the hole of the second timepiece component.

**9.** Method as claimed in any one of claims 1 to 8, **characterised in that** the monomer or polymer in the liquid or pasty state is applied at ambient temperature.

**10.** Method as claimed in any one of claims 1 to 9, **characterised in that** the monomer or polymer in the liquid or pasty state has a viscosity less than or equal to 10 Pa·s.

**11.** Method as claimed in any one of claims 1 to 10, **characterised in that** the monomer or polymer in the liquid or pasty state is applied using a tool such as an injection needle having an opening with a diameter of 200 microns or less.

**12.** Method as claimed in any one of claims 1 to 11, **characterised in that** the monomer or polymer in the liquid or pasty state is cross-linked by flash-linking or UV irradiation.

**13.** Assembly of two timepiece components by driving in accordance with the method of any one of claims 1 to 12.

EP 3 101 485 B1

Fig.1

3

2

Fig.2

(A ⁺⁻ b) + c

2

3

1

e

A ⁺⁻ a

Fig.3

2

3

Fig.4

2

3

9

**RÉFÉRENCES CITÉES DANS LA DESCRIPTION**

**Documents brevets cités dans la description**

- EP 2442190 A
- CH 706645

- DE 102012221322